# EUROPÄISCHE PATENTSCHRIFT

(11) **EP 0 715 608 B1**
(45) Veröffentlichungstag und Bekanntmachung des Hinweises auf die Patenterteilung: **23.07.1997**
(21) Anmeldenummer: 94923583.2
(22) Anmeldetag: 18.08.1994
(51) Int. Cl.: C02F 9/00, D21C 11/00

(54) **VERFAHREN ZUR VERBRENNUNG DES ÜBERSCHUSSSCHLAMMES**
METHOD OF INCINERATING SLUDGE RESULTING FROM WASTE-WATER TREATMENT
PROCEDE POUR L'INCINERATION DES BOUES EXCEDENTAIRES

(30) Priorität: 23.08.1993 AT 1689/93
(43) Veröffentlichungstag der Anmeldung: 12.06.1996
(73) Patentinhaber: AUSTRIAN ENERGY & ENVIRONMENT SGP/WAAGNER-BIRO GmbH, A-1211 Wien (AT); NEUSIEDLER AKTIENGESELLSCHAFT, 3363 Ulmerfeld-Hausmening (AT)
(72) Erfinder: DREXLER, Gerhard, A-3361 Aschbach (AT); FISCHER, Robert, A-3331 Kematen (AT); GLASER, Wolfgang, A-8052 Graz (AT); HARTL, Rainer, A-3300 Amstetten (AT); HINTERBERGER, Herbert, A-3331 Kematen (AT); LOQUENZ, Heinz, A-8020 Graz (AT); PICHLER, Otto, A-3362 Mauer (AT); TAMANDL, Kurt, A-8020 Graz (AT); YALDEZ, Peter, A-8042 Graz (AT)
(86) Internationale Anmeldenummer: AT9400115
(87) Internationale Veröffentlichungsnummer: WO9506011

(56) Entgegenhaltungen:
- WO-A-94/15019
- DE-A- 3 932 979
- TAPPI JOURNAL, Band 65, Nr. 10, Oktober 1982, Atlanta, GA (US); R.R. PERRAULT, Seiten 77-80
- TAPPI JOURNAL, Band 71, Nr. 7, Juli 1988, Atlanta, GA (US); E. SEBBAS, Seiten 53-58
- ABSTRACT BULLETIN OF THE INSTITUTE OF PAPER CHEMISTRY, Band 53, Nr. 2, Februar 1982, Appleton, WI (US); B.M. BUKHTEEV, Seiten 196-197

## Beschreibung

Die Erfindung betrifft ein Verfahren zur Verbrennung des Überschußschlammes biologischer Abwasserreinigungsanlagen mit Abwasserneutralisation von Papier- oder Zellstoffanlagen, bei der das neutralisierte Abwasser in einer biologischen Reinigung geklärt wird.

Derartige Verfahren sind bekannt, weisen jedoch den Nachteil auf, daß ein Teil des Neutralisationsmittels in der biologischen Reinigung karbonatisiert wird, so daß ein großer Aufwand an Neutralisationsmitteln entsteht. Dazu kommt noch, daß bei Zellstoffanlagen ein saures Brüdenkondensat entsteht, welches auch vor seiner Einleitung in die biologische Stufe neutralisiert werden muß.

Die Erfindung hat es sich zur Aufgabe gestellt, beide Probleme gleichzeitig bei einem geringeren Neutralisationsaufwand zu lösen.

Die Erfindung ist dadurch gekennzeichnet, daß der entstehende karbonathaltige Überschußschlamm zuerst mit dem sauren Brüdenkondensat aus der Eindampfanlage für die Ablauge aus der Zellstoffkochung durchmischt, zum größten Teil entkarbonisiert, dann eingedickt und mit der Ablauge wie z. B. eingedickter Dünnlauge oder einem anderen Brennstoff vermischt, und anschließend verbrannt wird. Ausgestaltungen der Erfindung sind in den Unteransprüchen 2 - 5 angegeben.

Es zeigt sich bei der Durchführung der Erfindung, daß zur Neutralisation des Abwassers Ca(OH)₂ verwendet werden kann, ohne daß bei der Verbrennung des Schlammes im Laugenkessel eine Kalkanreicherung bei der Erzeugung der Rohsäure für den Zellstoffprozeß entsteht. Der in der biologischen Reinigungsstufe entstehende im Abwasser unlösliche Karbonatschlamm wird durch das eingeleitete saure Brüdenkondensat aus der Eindampfanlage in lösliche Salze bzw. lösliche Kalziumverbindungen und organsiche Säuren umgewandelt, die als Flüssiganteil wieder in die biologische Kläranlage eingebracht werden und schließlich bei der Nachklärung im gelösten Zustand in den Vorfluter gelangen, wodurch sie aus dem Prozeß ausgeschleust werden. Es wird somit nicht nur der Neutralisationsaufwand verringert, sondern darüber hinaus auch die unerwünschte Kalkanreicherung in der Kochsäure vermieden.

Die Erfindung ist in der angeschlossenen Figur beispielsweise und schematisch in Form eines Schaltbildes dargestellt.

Die Bezugszeichen 1 bis 6 bezeichnen den Kreislauf der Rückgewinnung der Kochchemikalien, wobei im Laugenverbrennungskessel 1 durch Verbrennung der Ablauge die Chemikalien für die Rohsäuregewinnung 2 anfallen. Die Rohsäure wird dann nach einer Aufstärkung 3 der Kocherei 4 zugeführt. Die entstehende Ablauge wird in der Laugenerfassung 5 gesammelt und schließlich in einer Eindampfanlage 6 in einen im Laugenverbrennungskessel 1 verbrennungsfähigen, flüssigen Zustand gebracht.

Unabhängig davon wird das Abwasser 7 der Zellstoffabrik in einer Neutralisationsstufe 8 vor bzw. nachher mit Kalzium und/oder Mg-Hydrat neutralisiert und einem Vorklärer 9 zugeführt. Das vorgeklärte neutralisierte Abwaser wird nun in die biologische Reinigungsstufe 10 eingeleitet, wobei durch die bakterielle Umwandlung der Inhaltsstoffe CO₂ entsteht, welches einen Teil des Neutralisationsmittels bindet und zu Karbonat umwandelt. In der Nachklärstufe 11 wird die entstandene Biomasse durch Ableitung der geklärten flüssigen Phase eingedickt und in die biologische Reinigungsstufe 10 rückgeführt. Der beim Reinigungsprozeß entstandene Überschußschlamm wird einem Voreindicker 12 zugeführt und hiebei auf etwa 5 - 7 % ATS eingedickt. Diesem Überschußschlamm wird nun durch die Leitung 14 von der Eindampfanlage Brüdenkondensat beigemischt, wobei die sauren Bestandteile des Brüdenkondensats mit dem suspendierten Kalzium und/oder Mg-Karbonat reagieren und lösliche Salze bilden. Diese werden in gelöster Phase vom nachgeschalteten Waschfilter wieder zur Neutralisation 8 geleitet und gehen mit der flüssigen Phase zum größten Teil in den Vorfluter. Der im Waschfilter 13 gewaschene Schlamm wird nun weiter mechanisch eingedickt, entweder direkt der Dicklauge beigemischt oder mit der Dünnlauge in der Eindampfanlage 6 eingedickt und anschließend im Laugenverbrennungskessel 1 verbrannt.

Der pH-Wert der Dünnlauge wird vor dem Eintritt in die Eindampfanlage 6 auf mindestens 4 angehoben. In der Eindampfanlage 6 wird die Dünnlauge eventuell mit dem eingemischten Überschußschlamm auf etwa 50 - 70 % ATS eingedickt und als Dicklauge dem Laugenverbrennungskessel 1 zugeführt. Die in der Eindampfanlage entstehenden Brüden werden kondensiert und über die Leitung 14 in den Überschußschlamm der biologischen Reinigung eingeleitet, wo die sauren Bestandteile des Brüdenkondensates mit den Salzen im Überschußschlamm reagieren, wodurch die unlöslichen Salze in der flüssigen Phase löslich werden und damit im Waschfilter zum größten Teil ausgewaschen und mit dem gereinigten Abwasser in den Vorfluter eingebracht werden.

Durch die Erfindung wird somit die Einbindung der Kläranlage in die Säurerückgewinnung und in den Chemikalienkreislauf realisiert, was einerseits die wirtschaftliche Verwertung von Problemstoffen ermöglicht und andererseits die Anlagen- bzw. Betriebskosten reduziert.

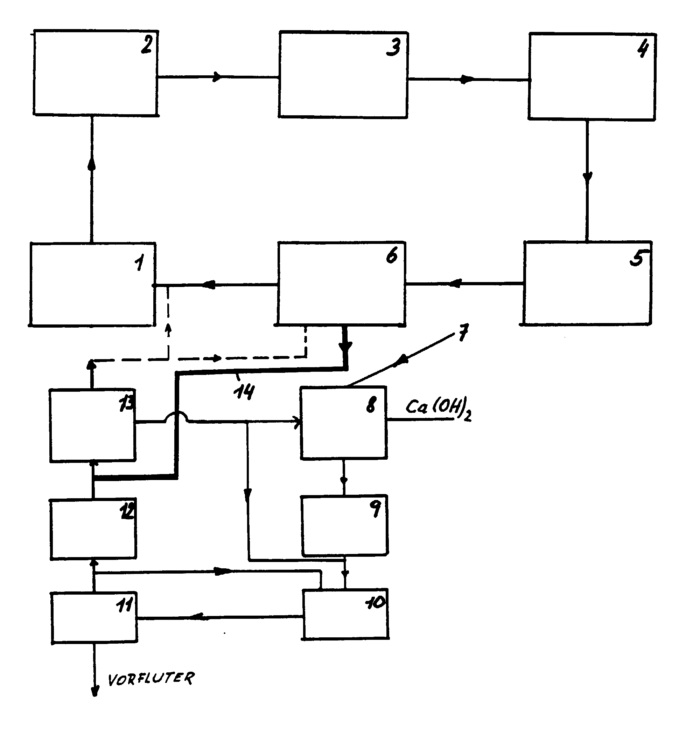

## Patentansprüche

1. Verfahren zur Verbrennung des Überschußschlammes biologischer Abwasserreinigungsanlagen mit Abwasserneutralisation von Papier- oder Zellstoffanlagen, bei der das neutralisierte Abwasser in einer biologischen Reinigung geklärt wird, dadurch gekennzeichnet, daß der entstehende karbonathaltige Überschußschlamm zuerst mit dem sauren Brüdenkondensat aus der Eindampfanlage für die Ablauge aus der Zellstoffkochung durchmischt, zum größten Teil entkarbonatisiert, dann eingedickt mit Ablauge, wie z. B. eingedickter Dünnlauge oder einem anderen flüssigen Brennstoff vermischt und anschließend verbrannt wird.

2. Verfahren nach Anspruch 1, dadurch gekennzeichnet, daß der neutralisierte Überschußschlamm in einem Laugenverbrennungskessel mit angeschlossener Anlage für die Flugascheabscheidung verbrannt wird.

3. Verfahren nach Anspruch 1, dadurch gekennzeichnet, daß das zu verbrennende Laugen- Schlammgemisch vor der Verbrennung auf insbesondere 50 - 70 % ATS eingedickt wird und die entstehenden Brüden kondensiert sowie mit dem Schlamm vor seiner Eindickung durchmischt werden.

4. Verfahren nach Anspruch 1, dadurch gekennzeichnet, daß die Dünnlauge vor der Einmischung des Überschußschlammes auf einen pH-Wert von mindestens 4 eingestellt wird.

5. Verfahren nach Anspruch 1, dadurch gekennzeichnet, daß der Überschußschlamm nach der Einmischung des Brüdenkondensats zuerst mechanisch entwässert, insbesondere durch eine Filterpresse oder Dekanter, und/oder thermisch eingedickt wird, bevor er mit dem Brennstoff vermischt und verbrannt wird.

## Claims

1. Process for combustion of surplus sludge of biological waste water purification plants with waste water neutralisation of paper and pulp deposits in which the neutralised waste water is purified by way of biological purification, **characterised in that** developing carbonated surplus sludge is first mixed with the sour vapour condensate from the evaporating unit for the waste liquor of the pulp digester, most of it is decarbonated, then thickened with waste liquor. for example thickened thin liquor or another liquid fuel, and subsequently combusted.

2. Process according to Claim 1, **characterised in that** the neutralised surplus sludge is combusted in a pulp combustion tank with a thereto connected fly-ash separation unit.

3. Process according to Claim 1, **characterised in that** the liquor or sludge mixture to be combusted is prior to combustion thickened, in particular to 50 - 70 % ATS, and developing vapours are condensed or mixed with the sludge prior to it being thickened.

4. Process according to Claim 1, **characterised in that** the thin liquor is prior to mixing in the surplus sludge, set to a pH value of at least 4.

5. Process according to Claim 1, **characterised in that** the surplus sludge is, after the vapour condensate has been mixed in, initially mechanically dehydrated, in particular by a filter press or decanter, and/or thermally thickened, before being mixed and combusted with the fuel.

## Revendications

1. Procédé pour la combustion des boues en excès d'installations d'épuration biologique des eaux usées avec neutralisation des eaux usées d'installations de fabrication de papier et de pâte, dans laquelle les eaux usées neutralisées sont clarifiées dans une épuration biologique, caractérisé en ce qu'on mélange d'abord intimement les boues en excès carbonatées qui se forment avec le condensat des vapeurs acide provenant de l'installation d'évaporation pour la lessive résiduaire issue de la cuisson de la pâte, on les soumet en grande partie à une décarbonatation et on les mélange avec la lessive résiduaire telle que par exemple la lessive d'échappement épaissie ou avec un autre combustible liquide et ensuite, on les brûle.

2. Procédé selon la revendication 1, caractérisé en ce qu'on brûle les boues en excès neutralisées dans une cuve de combustion des lessives à laquelle est adjointe une installation pour la séparation des cendres volatiles.

3. Procédé selon la revendication 1, caractérisé en ce qu'on épaissit le mélange lessives-boues à brûler avant la combustion pour obtenir une valeur en particulier de 50-70% ATS et on condense les vapeurs qui se forment et on les mélange intimement avec les boues avant de les épaissir.

4. Procédé selon la revendication 1, caractérisé en ce qu'on règle la lessive d'échappement avant l'introduction des boues en excès par mélange à une valeur de pH d'au moins 4.

5. Procédé selon la revendication 1, caractérisé en ce qu'on soumet les boues en excès après l'introduction du condensat de vapeurs par mélange d'abord à une déshydratation mécanique, en particulier à l'aide d'un filtre-presse ou d'un appareil à décanter et/ou on les soumet à un épaississement thermique avant de les mélanger avec le combustible et de les brûler.
